## Europäisches Patentamt
## European Patent Office
## Office européen des brevets

(11) Publication number: **0 143 649**
**B1**

(12) **EUROPEAN PATENT SPECIFICATION**

(45) Date of publication of patent specification: **19.07.89**

(51) Int. Cl.⁴: **B 60 R 16/02**

(21) Application number: **84308243.9**

(22) Date of filing: **28.11.84**

(54) Out station arrangement for a vehicle electrical system.

(30) Priority: **30.11.83 GB 8331972**

(43) Date of publication of application:
**05.06.85 Bulletin 85/23**

(45) Publication of the grant of the patent:
**19.07.89 Bulletin 89/29**

(84) Designated Contracting States:
**GB**

(56) References cited:
**FR-A-2 158 900**
**FR-A-2 445 769**
**US-A-4 232 231**

(73) Proprietor: **LUCAS INDUSTRIES public limited company**
**Great King Street**
**Birmingham, B19 2XF West Midlands (GB)**

(72) Inventor: **Salway, Peter Hugh**
**3 High Meadow Road**
**Kings Norton Birmingham B38 9AP (GB)**

(74) Representative: **Prutton, Roger et al**
**MARKS & CLERK Alpha Tower Suffolk Street**
**Queensway**
**Birmingham B1 1TT (GB)**

Courier Press, Leamington Spa, England.

## Description

This invention relates to an outstation arrangement for a vehicle system.

With the increasing complexity of vehicle wiring systems, there are advantages in providing switches for loads close to their location and in providing a single power supply line for several loads. In such an arrangement, the protection of the individual loads from overcurrent presents a problem. If the loads are protected by providing a single fuse in the power supply line, then power to all the loads is lost in the event of fuse failure. Alternatively, if individual fuses are provided for each load, then such fuses will be distributed around the vehicle and will be difficult to replace.

It has also been described (see US—A—3842249) to utilise for each load a remote power controller which is controlled from a central location and which includes inbuilt means for detecting a fault in the load it controls and automatically tripping open. This prior proposal involved transmission of "load tripped" data back to a central controller which has arranged to retry closing that remote power controller a predetermined number of times before treating the fault as permanent. This prior proposal also involved the inclusion in each remote power controller of the tripping means for tripping open the controller when a fault was detected. Each remote power controller is, therefore, required to be considerably more complex than a simple relay or solid state switch.

Accordingly, it is an object of this invention to provide a new or improved outstation for a vehicle electrical system in which the above-mentioned problems are overcome.

According to this invention, there is provided an outstation arrangement for a vehicle electrical system comprising a common circuit responsive to incoming data signals and arranged to produce a set of control signals for controlling a set of loads associated with said common circuit and a set of switch means each of which is arranged to control the flow of current to an associated load in response to a respective one of said control signals, characterised in that there is a set of fault detectors each of which is associated with one of said loads, and in that said common circuit is responsive to signals from all the fault detectors and operates, upon detection of a fault by one of said fault detectors, to remove the control signal corresponding to the load associated with that fault detector.

Conveniently, the common circuit may include a main control logic circuit which periodically reissues said control signals in accordance with said incoming signals, a first register for storing said control signals, a second register for storing fault signals from said fault detectors, and signal combining means for combining the fault signals, said signal combining means being connected to said first register so as to be disable all its outputs to said switch means when a fault is detected by any of the fault detectors, and said second register being connected to said first register to inhibit the output thereof to the one of switch means in respect to which a fault was detected, when the control signals are next reissued by the logic circuit.

The logic circuit may be a computer.

This invention will now be described in more detail, by way of example, with reference to the accompanying drawings, in which:

Figure 1 is a block diagram of a vehicle multiplex system incorporating outstations embodying this invention; and

Figure 2 is a circuit diagram of an outstation arrangement forming part of the system shown in Figure 1.

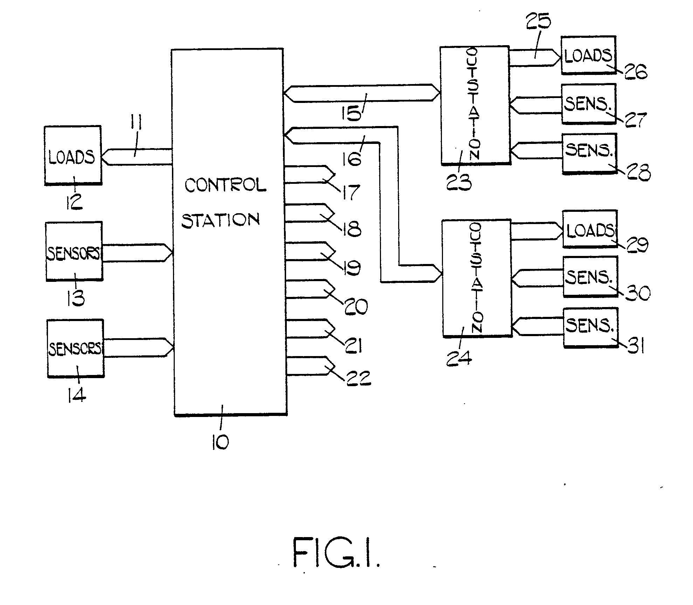

Referring now to Figure 1, the vehicle multiplex system has a control station 10 which may be conveniently situated in the vicinity of the vehicle dashboard. The control station 10 supplies control signals on a bus 11 to a set of loads 12 located in its immediate vicinity and receives signals from switch sensors 13 and analog sensors 14. The station 10 is connected to a set of eight outstations by eight buses 15 to 22. The bus 15 is connected to an outstation 23 and the bus 16 is connected to an outstation 24, the remaining outstations being omitted for reasons of clarity. The outstation 23 provides control signals on a bus 25 for a set of loads 26 situated in its vicinity, the loads 26 receiving power from a single power supply line. The outstation 23 also receives signals from a set of switch sensors 27 and from a set of analog sensors 28. Similarly, the outstation 24 controls a set of loads 29 and receives signals from a set of switch sensors 30 and analog sensors 31. An example of a multiplex system which may be used with the outstation arrangement of the present invention is described in our co-pending European Patent Application 84308244.7 of even filing date entitled "Vehicle Multiplex System", published on 05.06.85 as EP—A—0 143 650.

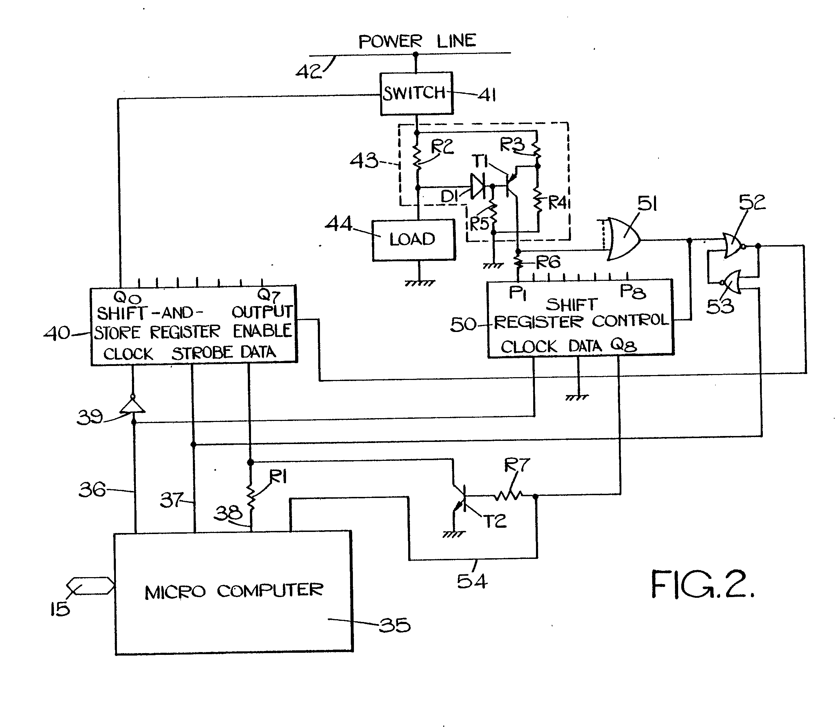

The arrangement of each outstation is generally similar and the arrangement for the outstation 23 is shown in Figure 2. Station 23 comprises a microcomputer 35 which receives the data on bus 15. Although not shown, the microcomputer 35 also receives data from the switch sensors 27 and from the analog sensors 28 via an analog-to-digital converter.

The microcomputer 35 has three output ports which are connected respectively to lines 36, 37 and 38. Line 36 is connected through an inverter 39 to the CLOCK input of a type 4094 shift and store register 40. Line 37 is connected to the STROBE input and line 38 is connected through a resistor R1 to the DATA input. The Q0 to Q7 outputs of shift and store register 40 form bus 25 and provide a set of control signals for the loads 26. Microcomputer 35 is arranged to supply data to the shift and store register 40 at periodic intervals. The data is supplied on line 38 and it is clocked into a shift register which forms part of the shift and store register 40 under the control of clock pulses on line 36. When this shift register is loaded, the data is transferred to a set of latches incorporated in the shift and store register 40 by a strobe pulse provided on line 37. The latched data will then appear on outputs Q0 to Q7 if a high signal is present on the Output Enable input of register 40.

The Q0 output of register 40 provides a control signal to the control terminal of a switch 41 which may be either a relay or a semi-conductor switching device. One terminal of switch 41 is connected to a power line 42 and the other terminal is connected through a current detector 43 and a load 44 to earth, the load 44 being one of loads 26. The current detector 43 comprises resistors R2, R3, R4, transistor T1, and diode D1, the components being chosen so that transistor T1 turns on in the event of overcurrent thereby providing a high voltage at its collector. Although not shown, the outputs Q1 to Q7 of register 40 provide control signals for seven other loads forming loads 26 with circuitry similar to that described with reference to the Q0 output, each of these loads also being associated with an overcurrent detector.

The collector of transistor T1 of detector 43 is connected through a resistor R6 of the P1 input of a type 4021 shift register 50, the inputs P2 to P8 being connected in a similar manner to the remaining seven overcurrent detectors. The collector of transistors T1 is also connected to one input of an OR gate 51, the remaining seven inputs of which are connected in a similar manner to the remaining seven current detectors.

The output of OR gate 51 is connected to the CONTROL input of shift register 50 and also to one input of a NOR gate 52. The NOR gate 52 is connected as a flip-flop to a further NOR gate 53. The output of NOR gate 52 is connected to the OUTPUT ENABLE input of register 40 and one input of NOR gate 53 is connected to the line 37. The CLOCK input of shift register 50 is connected to line 36 and its DATA input is connected to earth.

The Q8 output of shift register 50 is connected through a resistor R7 to the base of an NPN transistor T2, the emitter of which is connected to earth and the collector of which is connected to the DATA input of register 40. The Q8 output of register 50 is also conencted via a line 54 to an input of microcomputer 35.

When a high signal is supplied to the CONTROL input of shift register 50, the data on the P1 to P8 inputs are transferred to its internal shift register. When the signal on the CONTROL input is low, the data may be fed out sequentially on the Q8 output under the control of pulses supplied to its CLOCK input.

The overall operation of the outstation shown in Figure 2 will now be described.

As noted previously, the microcomputer 35 supplies data to register 40 at periodic intervals for controlling the loads and register 40 causes the switches associated with the relevant loads to turn on. Providing none of the current detectors detects an overcurrent, the switches will continue to operate in accordance with the data supplied to register 40. However, for example, if the detector 43 detects an overcurrent, a high signal will be supplied to the P1 input of shift register 50. At the same time, a high signal will appear at the output of OR gate 51 thereby causing the high signal at the P1 input to be transferred to the internal shift register. The signals appearing on the P1 to P8 inputs will also be transferred to the internal shift register but, unless overcurrent has been detected in one of the other loads, these inputs will be low. The high signal at the output of OR gate 51 will cause the output of NOR gate 52 to go low, thereby causing the Q0 to Q7 outputs of register 40 to go low thereby turning all the loads off temporarily. When the loads are turned off, the output of OR gate 51 will go low but the fault which has occurred will remain stored in shift register 50.

On the next occasion when microcomputer 35 supplies data to register 40, the fault pattern stored in shift register 50 will appear on its Q8 output and the arrangement is such that this pattern will appear in phase with the data on line 38. Consequently, when the data associated with load 44 appears, transistor T2 turns on thereby holding the DATA input of register 40 low. As the data is read out of shift register 50, it will be cleared because the DATA input is connected to earth. At the end of the set of data, the strobe pulse on line 37 will reset the flip-flop formed from NOR gates 52 and 53 thereby providing a high signal to the OUTPUT ENABLE input of register 40. Consequently, all the loads will be restored to their required state with the exception of load 44 which will remain off.

While a set of data is being read out of microcomputer 35, the fault pattern at the Q8 output of shift register 50 is supplied to the microcomputer on line 54. The microcomputer is programmed so as to inhibit the output of load 44 during the next and subsequent data transmissions. The microcomputer 35 may be arranged to retry loads which have been turned off following fault detection.

Although the present example has been described with reference to overcurrent detectors, the present invention may also be applied to other detectors, such as overvoltage or overtemperature detectors, and these may be provided either in addition to, or instead of, the overcurrent detectors. If desired, the outstation may be arranged to ignore transient overcurrnets due to bulb end rush current.

The present invention is not limited to an outstation which is based on a microcomputer and, if desired, the microcomputer 35 may be replaced with an alternative logic circuit. Although the shift and store register 40 and the shift register 50 have been described as being separate from the microcomputer 35, they may be incorporated in the microcomputer or, alternatively, in the logic circuit.

## Claims

1. An outstation arrangement for a vehicle electrical system comprising a common circuit responsive to incoming data signals and arranged to produce a set of control signals for controlling a set of loads (44) associated with said common circuit and a set of switch means (41) each of which is arranged to control the flow of current to an associated load (44) in response to a respective one of said control signals, characterised in that there is a set of fault detectors (43) each of which is associated with one of said loads (44), and in that said common circuit is responsive to signals from all the fault detectors and operates, upon detection of a fault by one of said fault detectors, to remove the control signal corresponding to the load associated with that fault detector.

2. An outstation arrangement as claimed in claim 1 in which said common circuit includes a main control logic circuit (35) which periodically reissues said control signals in accordance with said incoming signals, a first register (40) for storing said control signals, a second register (50) for storing fault signals from said fault detectors, and signal combining means (51, 52, 53) for combining the fault signals, said signal combining means being connected to said first register so as to disable all its outputs to said switch means (41) when a fault is detected by any of the fault detectors, and said second register being connected to said first register to inhibit the output thereof to the one of switch means (41) in respect of which a fault was detected, when the control signals are next reissued by the logic circuit.

3. An outstation arrangement as claimed in claim 2 in which said control combining means comprises a gate (51) collecting together signals from the fault detectors (43) and a latch cricuit (52, 53) connected to be set by the output of the gate (51) and reset by the logic circuit each time the control signals are reissued.

4. An outstation arrangement as claimed in claim 2 or claim 3 in which said first register is a serial-in parallel-out shift register (40) and said second register is a parallel-in serial-out shift register (50), both shift registers (40 and 50), being clocked in synchronism during reissue of the control signals by said logic circuit, so that a serial output from the second register indicating a fault in one load (44) coincides with loading of data from the logic circuit 35 to the first register representing the control signal for that load, said connection of second register to the first register effect suppression of loading of that data into the first register.

5. An outstation arrangement as claimed in any of claims 2 to 4 in which there is a connection from the second register (50) to the logic cricuit (35), said logic circuit operating to re-supply the control signal for a load in respect of which a fault signal has previously been received, after a predetermined iterval.

6. An outstation arrangement as claimed in any preceding claim in which said logic circuit is a computer.

**Patentansprüche**

1. Außenstationsanordnung für ein Fahrzeugelektrizitätssystem mit einer gemeinsamen Schaltung, die auf eingehende Datensignale reagiert und zum Erzeugen einer Gruppe von Steuersignalen zum Steuern einer Gruppe von Lasten (44) ausgebildet ist, die zu der gemeinsamen Schaltung zugeordnet sind, und einer Gruppe von Schalteinrichtungen (41), von denen jede zum Steuern des Stromflusses zu einer zugeordneten Last (44) als Reaktion auf ein entsprechendes Steuersignal ausgebildet ist, dadurch gekennzeichnet, daß eine Gruppe von Fehlerdetektoren (43) vorhanden ist, von denen jeder einer der Lasten (44) zugeordnet ist, und daß die gemeinsame Schaltung auf Signale von allen Fehlerdetektoren reagiert und auf den Nachweise eines Fehlers durch einen der Fehlerdetektoren zum Entfernen desjenigen Steuersignales tätig wird, welches der diesem Fehlerdetektor zugeordneten Last entspricht.

2. Außenstationsanordnung nach Anspruch 1, in der die gemeinsame Schaltung eine Hauptsteuerlogikschaltung (35), die periodisch die Steuersignale in Übereinstimmung mit den eingehenden Signalen wieder abgibt, ein erstes Register (40) zum Steuern der Steuersignale, ein zweites Register (50) zum Steuern von Fehlersignalen von der Fehlerdetektoren und eine Signalvereinigungseinrichtung (51, 52, 53) zum Vereinigen der Fehlersignale enthält, wobei die Signalvereinigungseinrichtung mit dem ersten Register so verbunden ist, daß sie alle ihre Ausgänge zu der Schalteinrichtung (41) unwirksam macht, wenn ein Fehler durch einen der Fehlerdetektoren erfaßt ist, und das zweite Register mit dem ersten Register zum Verhindern von dessen Ausgabe an eine der Schalteinrichtungen (41), im Hindblick auf die ein Fehler entdeckt wurde, verbunden ist, wenn die Steuersignale als nächstes durch die logische Schaltung wieder ausgegeben werden.

3. Außenstationsanordnung nach Anspruch 2, in der die Signalvereinigungseinrichtung ein Gatter (51), das die Signale von den Fehlerdetektoren (43) sammelt, und eine Verriegelungsschaltung (52, 53), die so geschaltet ist, daß sie durch den Ausgang des Gatters (51) gesetzt wird und durch die logische Schaltung zurückgesetzt wird jedesmal, wenn die Steuersignale wieder ausgegeben werden, aufweist.

4. Außenstationsanordnung nach Anspruch 2 oder Anspruch 3, in der das erste Register ein Seriell-in-parallel-aus-Schieberegister (40) und das zweite Register ein Parallel-in-seriell-aus-Schieberegister (50) ist, wobei beide Register (40 und 50) synchron während des Wiederausgebens der Steuersignale durch die Logikschaltung getaktet werden, so daß ein serieller Ausgang von dem zweiten Register, das einen Fehler in einer Last (44) anzeigt, mit dem Laden von Daten von der Logikschaltung (35) zu dem ersten Register, das das Steuersignal für diese Last darstellt, zusammenfällt, wobei die Verbindung des zweiten Registers mit dem ersten Register das Unterdrücken des Ladsns dieser Daten in das erste Register bewirkt.

5. Außenstationsanordnung nach einem der Anspruch 2 bis 4, bei der es eine Verbindung von dem zweiten Register (50) zu der Logikschaltung (35) gibt, wobei die Logikschaltung zum Wiederanlegen des Steuersiganles an eine Last, in Bezug auf die ein Fehlersignal zuvor empfangen worden ist, nach einem vorbestimmten Intervall tätig ist.

6. Außenstationsanordnung nach einem der vorhergehenden Ansprüche, in der die Logikschaltung ein Computer ist.

**Revendications**

1. Agencement de poste terminal pour installation électrique de véhicule comprenant un circuit commun réagissant à des signaux de données d'entrée et agencé pour produire un ensemble de signaux de commande pour commander un ensemble de charges (44) associées audit circuit commun et un ensemble de dispositifs de commutation (41) dont chacun est agencé pour commander la circulation de courant vers une charge (44) associée en réaction à un signal respectif parmi lesdits signaux de commande, caractérisé en ce qu'on prévoit un ensemble de détecteurs d'anomalies (43) dont chacun est associé à l'une desdites charges (44), et en ce que ledit circuit commun réagit à des signaux provenant de tous les détecteurs d'anomalies et agit, lors de la détection d'une anomalie par l'un desdits détecteurs d'anomalies, en supprimant le signal de commande correspondant à la charge associée à ce détecteur d'anomalies.

2. Agencement de poste terminal selon la revendication 1, dans lequel ledit circuit commun comprend un circuit logique de commande principal (35) qui réémet périodiquement lesdits signaux de commande selon lesdits signaux arrivant, un second registre (50) pour mémoriser des signaux d'anomalies provenant desdits détecteurs d'anomalies, et des moyens de combinaison de signaux (51, 52, 53) pour combiner les signaux d'anomalies, lesdits moyens de combinaison de signaux étant reliés audit premier registre de façon à invalider toutes ses sorties vers lesdits dispositifs de commutations (41) lorsqu'une anomalie est détectée par l'un quelconque des détecteurs d'anomalies, et ledit second registre étant relié audit premier registre pour inhiber sa sortie vers celui des dispositifs de commutation (41) pour lequel on a détecté une anomalie, lorsque les signaux de commande sont ensuite réémis par le circuit logique.

3. Agencement de poste terminal selon la revendication 2 dans lequel lesdits moyens de combinaison de signaux comprennent une porte (51) rassemblant des signaux provenant des détecteurs d'anomalies (43) et un circuit de bascule (52, 53) monté de façon à être mis à 1 par la sortie de la porte (51) et à être mis à zéro par un circuit logique chaque fois que les signaux de commande sont réémis.

4. Agencement de poste terminal selon 1 revendication 2 ou 3, dans lequel ledit premier registre est un registre à décalage à entrée série et sortie parallèle (40) et le second registre est un registre à entrée parallèle et sortie série (50), les deux registres à décalage (40 et 50) étant synchronisés pendant la réémission des signaux de commande par ledit circuit logique, de sorte qu'une sortie série du second registre indiquant une anomalie dans une charge (44) coïncide avec le chargement de données du circuit logique 35 dans le premier registre représentant le signal de commande pour cette charge, ladite connexion du second registre avec le premier registre effectuant la suppression du chargement de ces données dans le premier registre.

5. Agencement de poste terminal selon l'une quelconque des revendications 2 à 4 dans lequel il y a une connexion entre le second registre (50) et le circuit logique (35), ledit circuit logique fonctionnant en réémettant le signal de commande pour une charge pour laquelle un signal d'anomalie a été reçu antérieurement, au bout d'un intervalle prédéterminé.

6. Agencement de poste terminal selon l'une quelconque des revendications précédentes, dans lequel ledit circuit logique est un calculateur.

FIG.I.

FIG.2.

POWER LINE

42

SWITCH — 41

43

R2 R3

T1

D1 R4

R5

44 LOAD

R6

51 52

Q0 SHIFT-AND- Q7
40 STORE REGISTER OUTPUT ENABLE
CLOCK STROBE DATA

50 SHIFT P1 P8
REGISTER CONTROL
CLOCK DATA Q8

53

39

36 37 38 R1

R7

T2

54

15

MICRO COMPUTER

35

EP 0 143 649 B1

2